(19) Europäisches Patentamt
European Patent Office
Office européen des brevets

(11) **EP 4 124 995 A1**

(12) **EUROPEAN PATENT APPLICATION**

(43) Date of publication:
**01.02.2023 Bulletin 2023/05**

(51) International Patent Classification (IPC):
**G06N 3/00** (2006.01)    **G06N 3/08** (2006.01)
**G06N 3/04** (2006.01)

(21) Application number: **21188744.3**

(22) Date of filing: **30.07.2021**

(52) Cooperative Patent Classification (CPC):
**G06N 3/08; G06N 3/006; G06N 3/0454**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicants:
• **TOYOTA JIDOSHA KABUSHIKI KAISHA**
  **Toyota-shi, Aichi-ken 471-8571 (JP)**
• **ETH Zurich - The Swiss Federal Institute of Technology Zurich**
  **8092 Zurich (CH)**

(72) Inventors:
• **ABBELOOS, Wim**
  **1140 BRUSSELS (BE)**
• **ZHANG, Zhejun**
  **8092 ZURICH (CH)**
• **LINIGER, Alexander**
  **8092 ZURICH (CH)**
• **DAI, Dengxin**
  **8092 ZURICH (CH)**
• **YU, Fisher**
  **8092 ZURICH (CH)**
• **VAN GOOL, Luc**
  **8092 ZURICH (CH)**

(74) Representative: **Cabinet Beau de Loménie**
  **158, rue de l'Université**
  **75340 Paris Cedex 07 (FR)**

(54) **TRAINING METHOD FOR TRAINING AN AGENT FOR CONTROLLING A CONTROLLED DEVICE, CONTROL METHOD FOR CONTROLLING THE CONTROLLED DEVICE, COMPUTER PROGRAM(S), COMPUTER READABLE MEDIUM, TRAINING SYSTEM AND CONTROL SYSTEM**

(57)    A training method for training a neural-network based IL agent (ILA) to calculate predictions ($\tau_t$) sufficient to calculate controls ($a_t$) for controlling a controlled device (V) to perform a task or parameters ($\alpha,\beta$) of a distribution of said predictions ($\tau_t$).

In this method, the IL agent (ILA) is trained by imitation learning to imitate an expert agent (XA) trained by reinforcement learning.

the IL agent (ILA) inputs IL data ($I_{IL}$) representing an environment of the controlled device and IL measurement vectors ($m_{IL}$) describing a state ($s_t$) of the controlled device (V), and outputs said predictions ($\tau_t$) or parameters ($\alpha,\beta$) of a distribution of said predictions ($\tau_t$).

The expert agent (XA) inputs RL data ($I_{RL}$) representing the environment of the controlled device and RL measurement vectors ($m_{RL}$) describing a state of the controlled device (V), and outputs said predictions ($\tau_t$) or parameters ($\alpha,\beta$) of said distribution of said predictions ($\tau_t$).

FIG.4

EP 4 124 995 A1

**Description**

FIELD OF THE DISCLOSURE

The present disclosure is related to methods and systems capable of calculating predictions sufficient to calculate controls for controlling a ground controlled device to perform a task. The ground controlled device can be in particular a vehicle; in this case, the task may consist in driving the vehicle to reach a destination.

BACKGROUND OF THE DISCLOSURE

Numerous methods have been developed in order to automatically control a controlled device, such as a vehicle. Many of these methods rely on neural networks to calculate the controls used to realize the control task. Among these methods, some methods use a neural network trained by end-to-end learning to control a vehicle, based on front-facing views.

Such a method is proposed in particular by the document Ref.[1] indicated below.

This document proposes, for controlling a vehicle, to use a neural-network based agent, the 'sensorimotor agent' trained by imitation learning. The sensorimotor agent is trained to imitate controls issued by a reference agent, the 'privileged agent'.

The privileged agent is also a neural-network based agent. The privileged agent is trained by imitation learning to imitate experts, who are, in that case, human drivers. In order to train the privileged agent, these drivers drove vehicles in order to generate a training dataset; the training dataset was then used to train the privileged agent.

While the control systems and methods proposed by Ref.[1] exhibit remarkable performance in terms of vehicle control, they require however to train the privileged agent based on a database of driving data produced by human drivers driving vehicles. For this reason, implementing these systems and methods is time-consuming and expensive.

Besides, the following references disclose various technologies related to control systems capable of calculating controls for controlling a vehicle:

[1] Dian Chen, Brady Zhou, Vladlen Koltun, and Philipp Krähenbühl. Learning by cheating. In Conference on Robot Learning (CoRL), pages 66-75, 2020.

[2] Felipe Codevilla, Eder Santana, Antonio M L'opez, and Adrien Gaidon. Exploring the limitations of behaviour cloning for autonomous driving. In Proceedings of the IEEE International Conference on Computer Vision (ICCV), pages 9329-9338, 2019.

[3] Alexey Dosovitskiy, German Ros, Felipe Codevilla, Antonio Lopez, and Vladlen Koltun. CARLA: An open urban driving simulator. In Proceedings of the Conference on Robot Learning (CoRL), pages 1-16, 2017.

[4] Eshed Ohn-Bar, Aditya Prakash, Aseem Behl, Kashyap Chitta, and Andreas Geiger. Learning situational driving. In Proceedings of the IEEE Conference on Computer Vision and Pattern Recognition (CVPR), pages 11296-11305, 2020.

[5] Aditya Prakash, Aseem Behl, Eshed Ohn-Bar, Kashyap Chitta, and Andreas Geiger. Exploring data aggregation in policy learning for vision-based urban autonomous driving. In Proceedings of the IEEE Conference on Computer Vision and Pattern Recognition (CVPR), pages 11763-11773, 2020.

[6] John Schulman, Philipp Moritz, Sergey Levine, Michael Jordan, and Pieter Abbeel. High-dimensional continuous control using generalized advantage estimation. In Proceedings of the International Conference on Learning Representations (ICLR), 2016.

[7] John Schulman, Filip Wolski, Prafulla Dhariwal, Alec Radford, and Oleg Klimov. Proximal policy optimization algorithms. arXiv:1707.06347, 2017.

[8] Marin Toromanoff, Emilie Wirbel, and Fabien Moutarde. Is deep reinforcement learning really superhuman on Atari? In Deep Reinforcement Learning Workshop of the Conference on Neural Information Processing Systems, 2019.

[9] Albert Zhao, Tong He, Yitao Liang, Haibin Huang, Guy Van den Broeck, and Stefano Soatto. Sam: Squeeze-and-mimic networks for conditional visual driving policy learning. In Conference on Robot Learning (CoRL), 2020.

[10] Qi, C., Zhou, Y., Najibi, M., Sun, P., Vo, K.T., Deng, B., & Anguelov, D. (2021). Offboard 3D Object Detection from Point Cloud Sequences. ArXiv, abs/2103.05073.

SUMMARY OF THE DISCLOSURE

In view of the above-mentioned problem, the objective of the present disclosure is to propose methods and systems to calculate controls for controlling a ground controlled device to perform a task, which exhibit the same or higher performances than known methods and systems, but are simpler to implement.

In order to meet the above purpose, a training method for training a neural-network based IL agent to calculate predictions sufficient to calculate controls for controlling a controlled device to perform a task or parameters of a distribution of said predictions is proposed.

In this method, the IL agent is configured to input at least one IL datum representing an environment of the controlled device and an IL measurement vector describing a state of the controlled device and to output said predictions or parameters of a distribution of said predictions.

The training method comprises an IL agent training step of training the IL agent by imitation learning so as to imitate an expert agent. This expert agent is a neural-network-based expert agent trained by reinforcement learning, configured to input at least one RL datum representing the environment of the controlled device and a RL measurement vector describing a state of the controlled device, and to output said predictions or said parameters of said distribution of said predictions.

The training method may comprise the step of training the expert agent. Thanks to this method, an IL agent can be obtained. Advantageously, this IL agent exhibits higher performances than many comparable IL agents. In addition, the RL expert is trained by reinforcement learning, which can be trained by simulation. That is, the RL expert can be trained by being coupled to an environment simulator in a loop; the RL expert and the environment simulator iteratively interact so as to predict the future evolution of the controlled device in its environment. In this purpose, at each iteration, the expert agent outputs predictions or parameters of a distribution of said predictions. On this basis, values of controls to control the controlled device are calculated. These control values are inputted to the environment simulator, which calculates by simulation the evolution over the next time period of the controlled device and its environment. The state of the controlled device and its environment at the next time period are then transmitted to the expert agent, which on this basis can calculate the next value of the predictions or the parameters of their distribution. A next iteration can then be executed.

Consequently, training the RL expert advantageously does not require data labelled by humans, contrary for instance to the above-mentioned privileged agent proposed by Ref.[1], which is trained by supervised learning using outputs of human drivers. In addition, the RL expert can discover edge cases which are not present - or extremely rarely - in a real world dataset.

Furthermore, since the RL expert is an automated expert, it can be used to automatically generate large-scale datasets with dense labels, which can then be used to efficiently train the IL agent.

In the present disclosure, the following notations are used:

RL refers to 'Reinforcement Learning' and IL refers to 'Imitation Learning'.

[-1, 1] refers to the range of real numbers between -1 and +1. Accordingly the expression 'x $\in$ [-1, 1]' means that x is any real number between -1 and +1.

'R' is the set of real numbers. Accordingly 'y $\in$ R$^3$' means that y is a triplet consisting of a sequence of 3 real numbers.

The word 'term', even in the singular form, may refer to a sum of a plurality of terms.

An image is a tensor having three dimensions or more, in which two dimensions correspond to locations in space of the information contained in the tensor. These locations can correspond to axial coordinates, for instance in the case of orthophoto images. They can also correspond to angular coordinates. For instance, an image of an environment of a controlled device may represent point of the environment of the controlled device, as projected by a radial projection on the image plane.

Accordingly an image I may be represented, in the case of a 3-dimensional tensor, as a datum I y $\in$ R$^{W \times H \times C}$, where the first two dimensions W and H are the width and height of the image, and the third dimension is the number of channels of the image. An image may comprise only one channel (C=1).

A top view image is an image for which the optical axis is vertical, oriented downward. A top view image can be an orthophoto image. It can also be a 'bird's eye view image', which is a specific type of top view in which the projection is such that areas of the scene are smaller in the image as they are seen at a larger angle from the optical axis.

For a mobile controlled device having a front direction in which it moves at a considered time point, a front view image is an image (an orthophoto image or a 'bird's eye view image'), representing the environment of the agent in the front direction at the considered time point.

An 'ego-vehicle' refers to a vehicle on which a considered control system is mounted.

A ground device is a device, or a machine, which is located or is operated on the ground. Accordingly a ground device can be for instance a road vehicle, an agricultural tractor, a combine, etc. It can also be a stationary robot fixed on the ground, etc.

When a noun is written followed by '(s)', it means that the object or item indicated by the noun can be in the singular or plural form. Accordingly, the expression 'object(s)' means 'at least one object'. Furthermore, a sentence like 'Object(s) are present' includes the singular form, that is, it encompasses the case where a single object is present. 'Property(ies)' means 'property or properties'.

The term "comprising a" should be understood as being synonymous with "comprising at least one" unless otherwise stated.

The prediction outputted by the IL agent (or the expert agent) is any information which is sufficient to calculate the controls to control the controlled device, at least for the next time step. The prediction can either be said controls (directly), or information which is sufficient to calculate said controls. For instance, the prediction can be a predicted future path followed by the controlled device. In such cases, the controls can be readily calculated by a controller. This controller can be any processing unit implemented on a computer, capable of calculating appropriate controls for the controlled device, so that the controlled device follows the predicted future path. Such controller can be for instance, in the case of a road vehicle, the low-level controller proposed by Ref.[1]. The future path can be defined by the positions of the controlled device (or of the parts of the controlled device, in the case of an articulated controlled device), over a future time period.

A datum representing an environment of the controlled device is any datum that contains information relative to the environment of the controlled device. Such datum can comprise for instance a pointcloud generated by a lidar, which contains information on the position of objects surrounding the controlled device. It can also comprise an image of the environment of the vehicle. This image can be an image initially acquired by a camera (possibly submitted to some post-processing), or a calculated image, for instance calculated by simulation means.

The controls for controlling the controlled device to perform a task is proposed can be any controls that can be transmitted to actuator(s) of the controlled device so that it performs the desired task. For instance, when the controlled device is a road vehicle, the controls may include at least one of a steering value, a brake value and a throttle value. In that case, as an alternative to the brake value and the throttle value, any other variable representative of the torque to be applied to the driving wheels of the vehicle can be used.

In some embodiments, the training method comprises the steps of:

(S22) acquiring on-board data by operating the controlled device to perform the task;
(S23) based on the on-board data, calculating RL data;
(S24) for each calculating RL datum among the calculating RL data, querying the expert agent to output said predictions or parameters of said distribution of said predictions;
(S40) recording the outputted predictions or parameters in an IL agent training dataset; and wherein

the IL agent training dataset is used to train the IL agent during the IL agent training step.

Actually, all the information needed to train the IL agent is recorded in the IL agent training dataset. Accordingly, depending on the loss function used for training the IL agent, part or all of the following data may be stored in the IL agent training dataset: latent features and/or values outputted by the expert agent, and/or values of variables recorded by sensors of the controlled device (for instance the speed of the controlled device) which are used for calculating the IL agent loss function, etc.

In these embodiments, the RL datum may be identical (equal) to the IL datum. However, in other embodiments the RL datum may is a datum which comprises information ("high-level information') not contained, or at least not easily accessible, in the IL datum. For instance, the RL datum can be a top view image of the environment of the controlled device, in which the relative positions of all surrounding mobile objects can be easily determined.

In some embodiments, an RL datum may include information such as limits, boundaries (e.g. bounding boxes) of objects present in the environment of the controlled device.

In some embodiments, an RL datum may include information acquired a plurality of sensors, for instance not only camera(s) but also lidar(s) and/or radar(s), etc.

In the above-proposed method, in order to implement the IL agent and/or the RL agent, different possibilities can be considered for the type, in particular the orientation, of the IL datum and the RL datum.

The IL datum and the RL datum may comprise one or more images. If the situations that have to be understood by the expert or IL agent are complex, the RL datum and/or the IL datum may comprise more than one RL image and/or more than one IL image respectively.

In some cases, the controlled device is mobile device having a front direction. In these cases, in some embodiments the IL datum includes a front-view image for the controlled device, and in some cases includes only said front view image.

In some cases, the controlled device is ground device, moving or operated at ground (or sea) level. In these cases, in some embodiments the RL datum preferably includes a top-view image for the controlled device, and in some cases includes only said top view image.

In some embodiments, when the controlled device is a road vehicle, the RL datum includes information about whether the road vehicle has stopped. For instance, said information about whether the road vehicle has stopped can be an absence of a 'Stop' road sign in the image, despite the presence of the road sign next to the road where the road vehicle is moving.

In some embodiments, the IL agent is further configured to output a value of a speed of change of variable(s) of the controlled device; and a loss function used during the IL agent training step includes a speed term which minimizes said speed of change.

Various architectures can be used to implement the IL agent.

In some embodiments, the IL agent comprises an IL encoder and at least one processing head; the IL encoder is a neural network configured to input said at least one IL image and said IL measurement vector and to output an IL latent feature; each one of said at least one processing head includes an action head; said action head is a neural network configured to input said IL latent feature and to output said predictions or parameters of said distribution of said predictions.

Optionally, the processing head may comprise an IL value head and/or a speed head.

The IL value head is a neural network configured to input said IL latent feature and to output a value, which represents an expected return associated with a policy of the expert agent.

The speed head is a neural network configured to input said IL latent feature and to output said value of a speed of change of said variable(s) of the controlled device.

In some variants of the above embodiment, the IL encoder comprises an IL perception module, an IL measurement module and an IL combination unit. The perception module is a neural network configured to input said at least one IL image, and to calculate an IL perception feature. The measurement module is a neural network configured to input the measurement vector and to calculate an IL measurement feature. The combination unit is a neural network configured to input the IL perception feature and the IL measurement feature and to output the IL latent feature.

In some embodiments, the IL agent is configured, based on said at least one IL datum, to calculate an IL perception feature; based on the measurement vector, to calculate a measurement feature; based on the IL perception feature and the IL measurement feature, to calculate an IL latent feature; and based on the IL latent feature, to calculate said predictions or said parameters of said distribution of said predictions.

In some embodiments, the expert agent is a model trained by model-free reinforcement learning using an RL loss function; the expert agent is configured to output said parameters of said distribution of said predictions; an RL loss function used to train the RL agent comprises an exploration term; and the exploration term is configured so as to minimize, during training (of the IL agent), a difference between said distribution of said predictions and a prior distribution.

The prior distribution is a distribution of the prediction which represents a desired policy for the controlled device, that is, a desired distribution of the predictions predicted by the expert agent. For instance, when the controlled device is a road vehicle, the prior distribution may correspond to a policy which complies with normal traffic rules.

In some embodiments, the expert agent is configured, based on said at least one RL datum and said RL measurement vector, to calculate an RL latent feature; based on the RL latent feature, to calculate said predictions or said parameters of said distribution of said predictions. In addition, the IL agent is configured, based on said at least one IL datum and said IL measurement vector, to calculate an IL latent feature; based on the IL latent feature, to calculate said predictions or said parameters of said distribution of said predictions.

In some variants of the above embodiments, the IL loss function used to train the IL agent comprises a feature term which is configured so as to minimize, during training (of the IL agent), a difference between the RL latent feature and the IL latent feature.

In some embodiments, the expert agent comprises an expert encoder, an action head and a value head; the expert encoder is a neural network configured to input at least the RL image and the RL measurement vector and to output an RL latent feature; the action head is a neural network configured to input the RL latent feature and to output said predictions or said parameters of said distribution of said predictions; and the value head is a neural network configured to input the RL latent feature and to output a value which represents an expected return associated with a policy of the expert agent and is used to train the expert agent.

In some variants of the above embodiments, the expert encoder comprises an perception module, a measurement module and a combination unit; the perception module is a neural network configured, based on the RL image, to calculate an RL perception feature; the measurement module is a neural network configured, based on the measurement vector, to calculate an RL measurement feature; the combination unit is a neural network configured, based on the RL perception feature and the RL measurement feature, to calculate an expert latent feature.

This architecture makes it possible to obtain a rich latent feature, the expert latent feature, which can be used for instance to train the IL agent.

In some embodiments, the expert agent is configured, based on the RL image to calculate an RL perception feature; based on the measurement vector, to calculate an RL measurement feature; and based on the RL perception feature and the RL measurement feature, to calculate the expert latent feature.

In some embodiments, the expert agent and the IL agent are configured to output said parameters of said distribution of said predictions, and said distribution of said predictions is represented by a beta distribution.

In some embodiments, an IL loss function used to train the IL agent comprises an action term; and

- either the expert agent and the IL agent are configured to calculate said predictions, and the action term is configured so as to minimize, during training, a difference between the predictions of the expert agent and the predictions of the IL agent, or

- the expert agent and the IL agent are configured to output said parameters of said distribution of said predictions, and the action term is configured so as to minimize, during training, a difference between a distribution of said predictions predicted by the expert agent and a distribution of said predictions predicted by the IL agent.

In some embodiments, the expert agent is configured to output a value. This value represents an expected return associated with the policy of (the successive actions outputted by) the expert agent. Said value can then be used for training the IL agent.

For instance, in some embodiments, an IL loss function used to train the IL agent comprises a value term; the expert agent is configured so as to calculate a value; and the value term is configured so as to minimize, during training, a difference between a value predicted by the expert agent and a value predicted by the IL agent.

In some embodiments, said at least one RL datum includes at least one multi-channel image comprising a plurality of channels. Each layer is normally dedicated to specific information, for instance, when the controlled device is a road vehicle, said channels can comprise respectively information relative to positions of road limits, information relative to positions of pedestrians, information relative to positions of road signs, etc.

When the controlled device is a vehicle, said at least one IL image of an environment of the controlled device can be (or can include) an image acquired by a front-facing camera of the vehicle.

In some embodiments, the expert agent is trained using policy optimization, in particular proximal policy optimization (PPO) with clipping. Such policy is presented in particular by Ref.[7]. The loss function in this case may include a policy term, representative of the clipped policy gradient.

In addition, in order to meet the objective of the present disclosure, the following control method is proposed. The control method comprises a step of using an imitation agent trained according to any one of the above-proposed training methods to calculate predictions sufficient to calculate the controls or parameters of a distribution of said predictions, and a step of calculating the controls based on said predictions or on said parameters of said distribution of said predictions.

These steps can constitute actually a single step. In that case, an imitation agent trained according to any one of the above-proposed training methods is used to directly issue controls for controlling the ground controlled device to perform the task.

In other embodiments, the imitation agent calculates predictions sufficient to calculate the controls or parameters of a distribution of said predictions. The controls are then calculated based on said predictions, or based on said parameters of said distribution of said predictions.

In particular implementations, the proposed method is determined by computer program instructions.

Accordingly, another purpose the present disclosure is to propose one or more computer program(s) comprising instructions which, when the instructions are executed by a computer, cause the computer to carry out the steps of one of the above-proposed training methods or one of the above-proposed control methods. The computer program(s) may use any programming language, and be in the form of source code, object code, or code intermediate between source code and object code, such as in a partially compiled form, or in any other desirable form. The computer may be any data processing means, for instance one or more personal computer(s), one or more processors, one or more remote servers, etc. It can be made up of a single machine or a plurality of machines, for instance spread over different locations.

The present disclosure also includes a non-transitory computer readable medium, having the one or more above-defined computer program(s) stored thereon.

The computer-readable medium may be an entity or device capable of storing the program. For example, the computer-readable medium may comprise storage means, such as a read only memory (ROM), e.g. a compact disk (CD) ROM, or a microelectronic circuit ROM, or indeed magnetic recording means, e.g. a floppy disk or a hard disk.

The present disclosure also includes a training system for training an agent to calculate predictions sufficient to calculate controls for controlling a ground controlled device to perform a task, or parameters of a distribution of said predictions; wherein the control system comprises one or more processors and a computer-readable medium; the computer-readable medium comprises computer instructions stored therein, wherein the instructions, when executed by the one or more processors, cause the one or more processors to carry out the steps of any one of the training methods presented above.

The present disclosure further includes a control system for calculating predictions sufficient to calculate controls for controlling a ground controlled device to perform a task, wherein the control system comprises one or more processors and a computer-readable medium; the computer-readable medium comprises computer instructions stored therein, wherein the instructions, when executed by the one or more processors, cause the one or more processors to calculate said predictions by implementing an IL agent trained by any one of the training methods presented above.

It is intended that combinations of the above-described elements and those within the specification may be made, except where otherwise contradictory.

It is to be understood that both the foregoing general description and the following detailed description are exemplary and explanatory only and are not restrictive of the disclosure, as claimed.

The accompanying drawings, which are incorporated in and constitute a part of this specification, illustrate embodiments of the disclosure and together with the description, and serve to explain the principles thereof.

It is to be understood that both the foregoing general description and the following detailed description are exemplary and explanatory only and are not restrictive of the disclosure, as claimed.

The accompanying drawings, which are incorporated in and constitute a part of this specification, illustrate embodiments of the disclosure and together with the description, and serve to explain the principles thereof.

BRIEF DESCRIPTION OF THE DRAWINGS

Fig. 1 is a schematic view showing a vehicle comprising a control system and a remote server used to train the control system, in accordance with the present disclosure;

Fig. 2 is a schematic representation of a training setup for training an expert agent according to the present disclosure;

Fig. 3 is a schematic general representation of a training setup for training an IL agent according to the present disclosure;

Fig. 4 is a more detailed schematic representation of the training setup of Fig.4;

Fig. 5 is a schematic representation of the channels of a top view of according to the present disclosure;

Fig. 6 is a block diagram showing the steps of a method for training an IL agent according to the present disclosure; and

Fig. 7 is a diagram representing the progress during training of various expert agents over a number of training iterations.

DESCRIPTION OF THE EMBODIMENTS

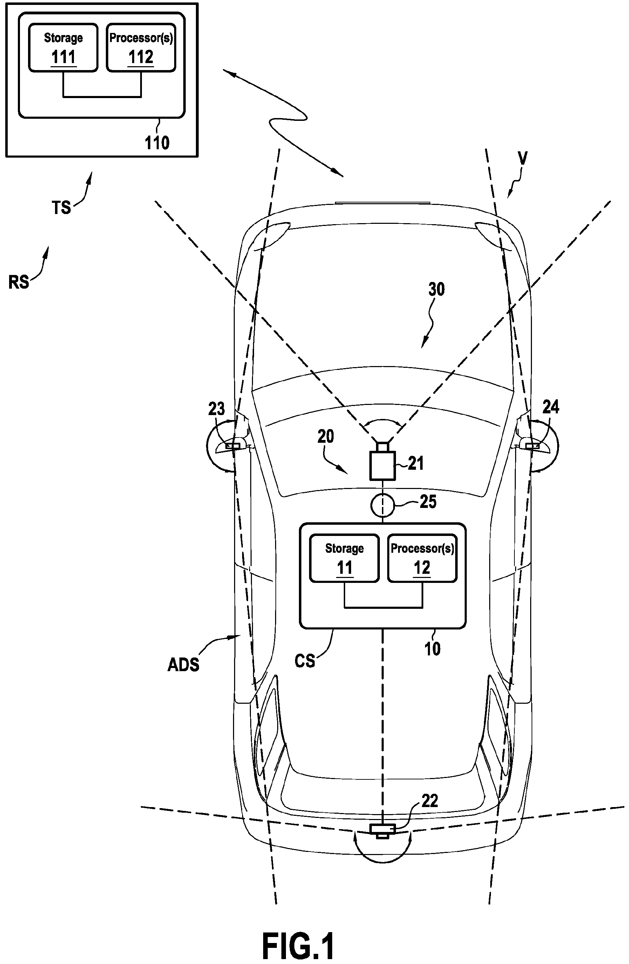

Training methods and systems and control methods and systems which constitute exemplary embodiments of the present disclosure are now going to be presented in relation with Figs.1-7. Wherever possible, the same reference signs will be used throughout the figures to refer to the same or like parts or components.

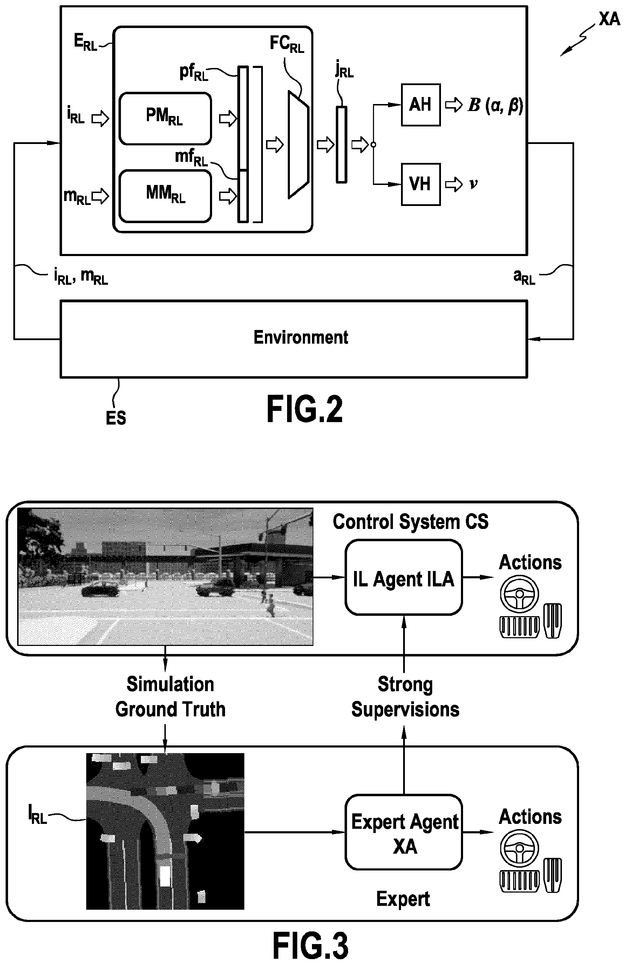

These methods and systems have been developed in order to control a controlled device which is, in these embodiments, an autonomous vehicle, such as the vehicle V moving on a road shown on Figs.1 and 3.

The vehicle V is controlled by a control system CS. The control system CS iteratively, that is, at each time step t, issues a prediction $\tau_t$. Based on this prediction, the respective values $a_t$ of the different controls necessary to control the controlled device (that is, the vehicle V) are calculated.

In the present embodiment, the prediction is itself the vector of the actions or controls $a_t$ for controlling the controlled device. This actions vector $a_t$ comprises the following controls: the steering angle, the throttle opening, and the braking amount.

In other embodiments, the prediction $\tau_t$ more broadly can be a datum which is used to calculate the controls $a_t$. For instance, the prediction can be a predicted path $\tau_t$ predicted for the vehicle over a future time period.

In that case, a controller can be configured, on the basis of a state $s_t$ of the vehicle at the considered time point, and on the predicted path $\tau_t$, to calculate the controls $a_t$ of the vehicle at the time point t.

The controls $a_t$ that have been calculated by the control system CS are transmitted respectively to the steering column actuator, the engine, the brakes, and the transmission unit of the vehicle so as to control the vehicle in accordance with the desired policy. This policy is defined by an IL agent ILA implemented by the control system CS.

The control system CS is part of an autonomous driving system ADS of the vehicle.

Most of the components and functional units of the autonomous driving system ADS are on-board vehicle V; however, part of them can be remote components, and can be for instance part of a remote server RS. The remote server RS and vehicle V include not-shown communication means to exchange information.

The vehicle V is a car, which represents a non-limiting example of a controlled device which can be controlled by an IL agent or an expert agent according to the present disclosure. The autonomous driving system ADS of vehicle V is configured to drive vehicle V in fully autonomous mode based mainly on the predictions outputted by the control system CS.

For training purposes, the IL agent ILA is not only implemented on vehicle V, but also on a training system TS implemented on the remote server RS.

In order to train the IL agent ILA, the training system TS comprises an expert agent XA, also capable of issuing controls to control vehicle V, but only used in the present embodiment to train the expert agent ILA.

The training system TS is configured to train the expert agent XA by reinforcement learning, and then to train the IL agent ILA by imitation learning, to imitate the trained expert agent XA.

When the IL agent ILA implemented by the control system CS is used to control vehicle V by issuing vehicle controls, control system CS functions essentially in a stand-alone mode, that is, without communicating with the remote server RS.

In vehicle V, the functions of the IL agent ILA, as well as of the whole control system CS, are implemented on a central driving computer 10 ('computer 10'). Computer 10 comprises a non-transitory storage medium 11 and one or more processor(s) 12. The one or more processors 12 are intended to be representative of the presence of any one or more processors or processing devices, of any of a variety of forms. In addition, although computer 10 is represented on Fig.1 in a single box, it may be a distributed calculation system, comprising a plurality of processors, possibly physically arranged on different locations. For instance, part of processors 12 may be part of remote server RS.

The ADS system further comprises a set of sensors 20, each sensor being connected to computer 10, a set of actuators 30 (not shown), and other components. The set of sensors 20 comprises in particular sensors configured to perceive an external environment of car 1, which include a front camera 21, a rear camera 22, two lateral cameras 23 and 24, and a roof-mounted lidar 25. The cameras are configured to cover a 360° angle around vehicle V.

The set of sensors 20 also comprises a set of sensors to monitor the state of the car, such as an inertial measurement unit, a rotation speed sensor for measuring the speed of rotation of the front wheels, etc.

Based on the output of sensors 20, the autonomous driving system ADS is configured to determine, at each time step (for instance, each 20 ms), the IL or RL measurement vector, respectively $m_{IL}$ and $m_{RL}$. These measurement vectors $m_{IL}$ and $m_{RL}$ comprises sets of variables which are representative of the state of the controlled device, at the considered time step.

In the present embodiment in which the controlled device is vehicle V, the measurement vector $m_{RL}$ ($m_{RL} \in R^6$) comprises the following variables: steering angle, throttle opening, braking amount, lateral and horizontal speeds of the vehicle. In addition, the IL measurement vector $m_{IL}$ includes: the speed of the vehicle (computed from the lateral and horizontal velocities of the vehicle), and optionally a high-level directional command (such as: 'turn left', 'turn right', 'go straight', 'follow the lane').

The data outputted by the sensors 20 and/or calculated by the autonomous driving system ADS are transmitted in real time or off-line to the control system CS, depending on the operation mode of the control system.

The control system CS and the remote server RS are mainly configured to exchange information off-line.

The training system TS is configured to implement training methods according to the present disclosure.

The training system TS is implemented on the remote server RS. The training system TS is implemented on a main training computer 110 ('computer 110'), which comprises a non-transitory storage medium 111 and one or more processor(s) 112. The one or more processors 112 are intended to be representative of the presence of any one or more processors or processing devices, of any of a variety of forms. In addition, although computer 110 is represented on Fig.1 in a single box, it may be a distributed calculation system, comprising a plurality of processors, possibly physically arranged on different locations.

Since the expert agent XA is only used for training purposes, in the present embodiment the functions of the expert agent XA are implemented on computer 110, as a part of the training system TS.

When the control system CS is in control mode for controlling vehicle V based on controls of the IL agent ILA, the measurement vector $m_{IL}$ and the image $i_{IL}$ of the front-facing camera 21 are transmitted at each time step to the control system CS, which on this basis calculates the actions or controls $a_t$ for controlling vehicle V.

Computer programs $P_{TrXA}$ and $P_{TrILA}$ comprising instructions which, when they are executed by the processor(s) 112, cause these processor(s) to carry out the steps of training methods according to the present disclosure for training respectively the expert agent XA and the IL agent ILA, are stored in storage medium 111. A computer program $P_{ILA}$ comprising instructions which, when they are executed by the processor(s) 12, cause these processor(s) to carry out the steps of a control method used to control vehicle V by implementing the IL agent ILA, is stored in storage medium 11. The programs $P_{TrILA}$ and $P_{ILA}$ and the storage media 111 and 11, are examples respectively of computer programs and computer-readable recording media according to the present disclosure. The training programs $P_{TrXA}$ and $P_{TrILA}$ are executed respectively to train the expert agent XA and the IL agent ILA, while the control program $P_{ILA}$ is executed to train the IL agent ILA.

The memories 111, 11 of the computers 110,10 constitute non-volatile recording media according to the present disclosure, readable respectively by the one or more processor(s) 112, 12 and on which the programs $P_{TrXA}$, $P_{TrILA}$, and $P_{XA}$, $P_{ILA}$ respectively are recorded.

An exemplary embodiment of an expert agent XA according to the present disclosure is now going to be presented in relation with Fig.2.

Fig.2 is a schematic representation of a training setup for training expert agent XA.

Advantageously, the expert agent XA is trained based only on simulation data. These simulation data are produced by an environment simulator ES, which is implemented in the training system TS.

In the present embodiment, the environment simulator is an urban driving simulator, and more specifically, the urban driving simulator CARLA presented by Ref.[3].

The environment simulator ES is a simulator which receives as inputs the actions (or controls) $a_t$ transmitted to the vehicle - normally by the control system CS - and, on this basis, calculates for the next time step the new state $s_{t+1}$ of the vehicle and its environment (including in particular the new positions and speeds of the different vehicles and other mobile objects present in the scene).

The environment simulator ES is further configured to calculate or output a predicted IL datum $i_{IL}$, a predicted RL datum $i_{RL}$ (based mainly, in this embodiment, on the predicted IL datum $i_{IL}$), and predicted measurement vectors $m_{RL}$ or $m_{IL}$, for the next time step.

In the present embodiment, the predicted IL datum is an image representing the environment of vehicle V, as it could be outputted by the front camera 21 of vehicle V at the next time step.

On the other hand, the predicted RL datum is a top view image $i_{IL}$ of the environment of the vehicle, as it could be seen at the next time step, calculated by the environment simulator ES.

When the outputs $i_{RL}$ and $m_{RL}$ of the environment simulator ES are inputted to the expert agent XA, based on this query the expert agent XA outputs calculated action $a_{RL}$. These calculated actions $a_{RL}$ are transmitted to the environment simulator ES as shown on Fig.2, which then calculates a new state $s_{t+1}$ of the environment, including in particular updated values $i_{RL}$ and m for step t+1. Accordingly, the future evolution of the environment can be simulated iteratively by the environment simulator ES in cooperation with the expert agent XA.

Accordingly, the inputs of the expert agent XA are the top view image $i_{RL}$ and the measurement vector $m_{RL}$.

At each time step, the expert agent XA receives these inputs, and on this basis outputs the controls $a_{RL}$ to control vehicle V for the next time step.

In order to reduce the complexity of the problem of controlling the vehicle for the expert agent, the RL datum $i_{RL}$ inputted to the expert agent is a top-view image, and more specifically a multi-layer (or multi-channel) image $i_{RL}$ comprising high-level information as compared with the image acquired by the front-facing camera 21, which constitutes the IL datum $i_{IL}$.

Indeed in the present embodiment, the image $i_{RL}$ is modelled as $i_{RL} \in [0, 1]^{W \times H \times C}$, where W and H are the width and height of the image, and C is the number of channels in the image. In the present embodiment for instance, $i_{RL}$ has 15 channels ($i_{RL} \in [0, 1]^{192 \times 192 \times 15}$); the RL image $i_{RL}$ may comprise any number of channels.

The top view image $i_{RL}$ representing the environment of vehicle V is calculated by the training system TS based on the output of sensors 20.

The small image on the bottom left corner of Fig.3 is an exemplary representation of such a top view image; it represents a crossing that vehicle V is about to cross. The top-view image $i_{RL}$ is calculated for instance on the basis of the images acquired by cameras 21-24 and the points of clouds acquired by the lidar 25 (and possibly additional information, e.g. pre-established maps of the scene, etc.).

In the image $i_{RL}$, the vehicle V is heading upwards. In some embodiments, the top view image may be calculated so that the ego-vehicle be centered in the image.

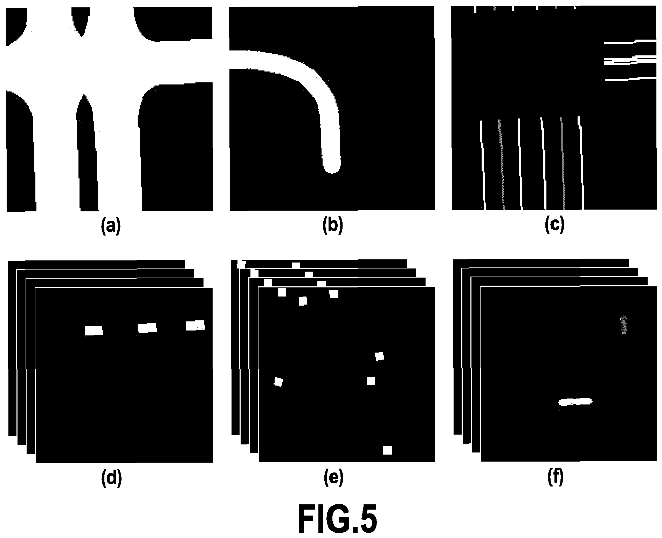

Fig.5 illustrates the different channels of a top view image $i_{RL}$. This image represents the environment of the vehicle when the vehicle is in the scene shown by the small image on the bottom left corner of Fig.3.

Drivable areas and intended routes are rendered respectively in Fig. 5(a) and 5(b). Fig. 5(c) represents the road markings, with solid lines represented in white and broken lines in grey. Fig. 5(d) which includes multiple channels is a temporal sequence of K grayscale images in which cyclists and vehicles are rendered as white bounding boxes. Fig. 5(e) is the same as Fig. 5(d) but for pedestrians. Similarly, stop lines at traffic lights and trigger areas of stop signs are rendered in Fig. 5(f). Red lights and stop signs are colored by the brightest level, yellow lights by an intermediate level and green lights by a darker level.

In the channel shown on Fig.5(f), a stop sign is rendered if it is active, i.e. the ego-vehicle enters its vicinity, but disappears once the ego-vehicle has made a full stop.

Advantageously, by including in the image $i_{RL}$ information relative to whether vehicle has stopped, it is possible to use a network architecture without recurrent structure and hence to reduce the model size of the expert agent.

In addition to image $i_{RL}$, the measurement vector $m_{RL}$ is also inputted to the expert agent XA.

The architecture of the expert agent XA is illustrated by Fig. 2.

The expert agent XA includes an expert encoder $E_{RL}$ and a processing head (or processing unit) PH comprising an action head AH and a value head VH.

The expert encoder $E_{RL}$ and the action head AH form together a neural network which constitutes a policy network, noted $\pi_{RL}$. On the other hand, the expert encoder $E_{RL}$ and the value head VH form together a neural network which constitutes a value network.

In this embodiment, the expert encoder $E_{RL}$ comprises a perception module $PM_{RL}$, a measurement module $MM_{RL}$ and an expert combination unit $FC_{RL}$.

The expert combination unit $FC_{RL}$ is constituted by a plurality of fully-connected layers.

The perception module $PM_{RL}$ is configured to encode the top view image $i_{RL}$ as an expert perception feature $pf_{RL}$ and the measurement module $MM_{RL}$ is configured to encode the RL measurement vector $m_{RL}$ as an expert measurement feature $mf_{RL}$. The expert perception feature $pf_{RL}$ and the expert measurement feature $mf_{RL}$ are concatenated and processed by the expert combination unit $FC_{RL}$, which outputs a latent feature $j_{RL}$.

In the embodiment presented herein, the perception module $PM_{RL}$ comprises six convolutional layers to encode the image $i_{RL}$ and the measurement module $MM_{RL}$ comprises two fully-connected layers to encode the measurement vector $m_{RL}$.

The action head AH of the expert agent XA outputs the actions $a_{RL}$ (representative of prediction $\tau_t$) that are transmitted to the actuators of the controlled device (the actual device or a simulated device) in order to control that device. In other embodiments, the expert agent is configured to calculate the value of the controls $a_{RL}$ on the basis of the prediction $\tau_t$ outputted by the action head.

In the present embodiment, the action head AH is configured to directly output the action $a_{RL}$ to control the controlled device for the next time step t+1, on the basis of the latent feature $J_{RL}$.

In the present embodiment, these controls or actions are the steering angle ($\in [-1, 1]$), the throttle opening ($\in [0, 1]$) and the braking amount ($\in [0, 1]$).

In parallel, at each time step t, the value head VH is configured to output an estimated value v (or $v_t$), on the basis of the latent feature $J_{RL}$. As known per se, this value is a value which represents the expected return associated with a policy of the expert agent (XA), starting from state $s_t$.

Generally speaking, the value $v_t$ of a state $s_t$ is the reward-to-go at that state, i.e. the sum of all future rewards $r_j$, j=t...t+N as of time t and state $s_t$, when the current policy (as defined in particular by the action head AH) is executed.

Each of the action head AH and the value head VH is composed of two fully-connected hidden layers.

With respect to the action head AH, different solutions can be envisaged to compute the actions $a_{RL}$ based on the output of the expert encoder $E_{RL}$.

As explained before, in the present embodiment, in order to avoid complex parameter tuning and system identification, the expert agent XA advantageously directly predicts actions $a_{RL}$. The expert agent in other embodiments can calculate action distributions, instead of actions. In both cases, the expert agent of the present disclosure advantageously is model-free, and does not require that a model of the vehicle be identified.

In the embodiment presented on Fig.2, more specifically the expert agent is configured to output parameters of a distribution of actions to control vehicle V. In this embodiment, these parameters are $(\alpha,\beta)$ where $(\alpha,\beta) \in [-1, 1]^2$ and correspond respectively to the steering angle and the acceleration. Positive acceleration corresponds to open positions of the throttle and negative acceleration corresponds to braking.

The action head is preferably configured to output action distributions modelled using a Beta distribution $B(\alpha,\beta)$, where $\alpha,\beta$ (> 0) are respectively the concentration on 1 and on 0.

Indeed, compared to the Gaussian distribution commonly used in model-free reinforcement learning, the support of the Beta distribution advantageously is bounded, thus avoiding clipping or squashing to enforce input constraints. This results in a better behaved learning problem, since no tanh layers are needed and the entropy and KL-divergence can be computed explicitly.

In addition, the modality of the Beta distribution is also suited for driving, where extreme manoeuvers may often be taken, for example emergency braking or taking a sharp turn.

The 'proximal policy optimization' (PPO) with clipping proposed by Ref.[7] is used to train the expert agent XA. The expert agent XA is trained end-to-end on the training system TS. During this training, all the embedded sub-networks of the expert agent XA (the perception module $PM_{RL}$, the measurement module $MM_{RL}$, the combination unit $FC_{RL}$, the action head AH and the value head VH) are trained simultaneously.

In order to prepare a training dataset for training the expert agent XA, a number of trajectories T are first collected.

Each trajectory T is collected by iteratively inputting a top-view image $i_{RL}$ and an RL measurement vector $m_{RL}$ to the expert encoder $E_{RL}$, processing these data through the expert agent XA to output an action $a_{RL}$; the action $a_{RL}$ is then inputted to the environment simulator ES, implemented on the training system TS, which calculates a new value of the state $s_{t+1}$ of the environment. This new value $s_{t+1}$ comprises new values of the top-view image $i_{RL}$ and the measurement vector m which can be inputted again in the expert encoder $E_{RL}$, etc.

By executing the loop described above, the values of the state $s_t$ and the actions $a_{RL}$, and possibly additional variables are collected iteratively at a succession of time steps so as to constitute an 'episode'. An episode accordingly extends over a time period during which consecutive values of some specific variables are collected, so as to constitute a trajectory.

Accordingly, a trajectory is defined as the vector: T = {$(i_{RL,t}, m_t, a_{RL}, r_t)_{t=0...T}$, z}, where $i_{RL,t}$ represents an IL image $i_{RL}$ at time step t, $r_t$ is a reward at time step t and z is a terminal event (explained below). The rewards $r_t$ will be used for training the value head VH, and are calculated for instance with the method proposed by Ref.[8], so as to penalize large steering changes, in order to prevent oscillating manoeuvres.

The specific variables which constitute a trajectory T are therefore the input images $i_{RL,k}$, the measurement vectors $m_{RL,k}$, the actions $a_k$ and the rewards $r_k$ at each one of successive time steps t=0....T.

A number of trajectories T are collected by performing repeatedly the above-described loop.

In the embodiment presented herein, at the beginning of each episode, a pair of start and target locations for vehicle V is randomly selected and a desired route for vehicle V is computed. Once the target is reached, a new random target is chosen, and the simulated trip of the vehicle continues, whereby values keep being collected to constitute the trajectory.

The episode is stopped when the terminal condition z is met. The terminal condition z is any one of terminal conditions defined by a termination conditions set Z. In the present embodiment, this terminal conditions set Z includes collision, running a red light or stop sign, route deviation and blocked.

The episodes collected in this manner constitute the training database for training the expert agent XA.

Once the training database has been constituted, the expert agent (in particular the value head VH and the action head AH) can be trained.

The policy network and the value network are updated together using one Adam optimizer with an initial learning rate of $10^{-5}$.

The value network is trained by reinforcement learning to predict the expected ground truth values.

In the present embodiment, these ground truth values for value $v_t$ are computed using collected rewards and according to generalized advantage estimations, using the calculation method of Ref.[6].

The policy network $\pi_{RL}$, whose weights or parameters are noted $\Theta$, is updated via

$$\Theta_{t+1} = \arg max_\Theta \ E_{\tau \sim \pi_{\Theta t}} \ [L_{RL}]$$

in which the loss function $L_{RL}$ is the sum of three terms:

$$L_{RL} = L_{PPO} + L_{ent} + L_{exp}$$

In this expression, the first term $L_{ppo}$ is the clipped policy gradient loss as defined by Ref.[7], with advantages. The 'advantages' can be calculated for instance using generalized advantage estimation proposed by Ref.[6].

The second term $L_{ent}$ is a maximum entropy loss commonly employed to encourage exploration:

$$Lent = -\lambda_{ent} H (\pi_\Theta (\bullet| i_{RL}, m_{RL}))$$

where H is a function outputting a value representative of the entropy of the distribution.

For instance and as in the present embodiment, $L_{ent}$ may constrain the action distribution towards a uniform prior because maximizing entropy is equivalent to minimizing the KL-divergence to a uniform distribution U:

$$H (\pi_\Theta) = -KL ( \ \pi_\Theta \ || \ U(-1,1))$$

where both distributions share the same support range.

The third term $L_{exp}$ is an exploration term $L_{exp}$ which encourages exploration in sensible directions that comply with basic traffic rules. According to the triggered terminal condition z, actions within $N_z$ steps before the termination of an episode are shifted towards a prior distribution $p_z$ via

$$Lexp = \lambda_{exp} . 1_{\{T-N_z+1,.....,T\}}(k) . KL ( \ \pi_\Theta (\bullet| i_{RL,k}, m_{RL,k}) \ || \ p_z)$$

where 1 is the indicator function; T is the time step at which the terminal condition z is met; $N_z$ is a predetermined integer which limits the temporal window considered for the exploration term $L_{exp}$, and may depend on the considered terminal condition z.

Unlike $L_{ent}$ which is effective for all samples, $L_{exp}$ only affects samples temporally close to the termination and it encodes an "advice" that prevents the same terminal condition from happening again.

Various distributions can be used for prior $p_z$.

For collisions and running traffic lights or stop signs, an exploration prior distribution B(1,2.5) is used for $p_z$ on the acceleration to encourage the expert agent XA to slow down, while the steering is unaffected. In contrast, for blockage an acceleration prior distribution B(2.5,1) is preferred. For route deviation a uniform prior B(1,1) is applied on the steering.

Despite being equivalent to the entropy term $L_{ent}$, the exploration term $L_{exp}$ by contrast encourages exploration only during the last period before terminal event.

In addition, in order to avoid infractions at high speed, an extra penalty proportional to the vehicle's speed may be added.

Advantageously, the expert agent does not depend on data from other experts. In addition, it is end-to-end trainable, hence it can generalize to new scenarios with minor engineering efforts, and further exhibits a high sample efficiency.

Regarding now the IL agent, various IL agents may be used as an IL agent according to the present disclosure, so as to benefit from the informative supervisions generated by the expert agent.

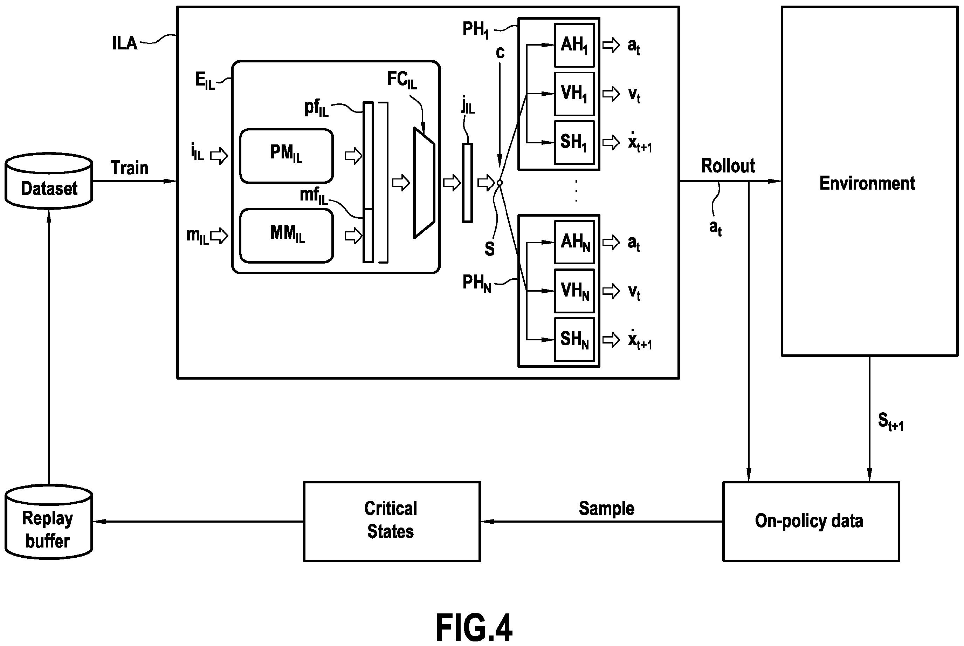

A general setup for training the IL agent ILA is shown on Fig.3. A more detailed setup for training agent ILA is shown on Fig.4, which shows in particular the network architecture of IL agent ILA.

The IL agent ILA includes an IL encoder $E_{IL}$ and a plurality of processing heads (that is, processing units) PHi where i=1...N corresponds to a total number of commands, or navigation instructions, that can be transmitted to the control system CS for driving the vehicle.

The IL encoder $E_{IL}$ includes a perception module $PM_{IL}$ that encodes the IL datum (in the present embodiment: the front image $i_{IL}$) as an IL perception feature $pf_{IL}$, a measurement module $MM_{IL}$ that encodes the measurement vector $m_{IL}$ as an IL measurement feature $mf_{IL}$, and an IL combination unit $FC_{IL}$.

Importantly, the IL datum $i_{IL}$ inputted by the IL agent is not limited to a camera image such as the front view image outputted by camera 21. The IL datum $i_{IL}$ inputted by ILA can be more broadly any combination of data (single/multiple) data acquired by one or more sensor(s) among camera(s), lidar(s) and/or radar(s). These sensors can be sensors of the controlled device, or other sensors (e.g. infrastructure-mounted sensors), in which case the data have to be acquired using V2V or V2I communication.

The IL combination unit $FC_{IL}$ is composed of a plurality of fully-connected layers (In the embodiment presented herein, only three fully-connected layers).

The IL combination unit $FC_{IL}$ receives the IL perception feature $pf_{IL}$ and the IL measurement feature $mf_{IL}$ respectively from modules $PM_{IL}$ and $MM_{IL}$, and on this basis calculates an IL latent feature $j_{IL}$ ($j_{IL} \in R^{256}$). The IL latent feature $j_{IL}$ preferably has the same size as the expert latent feature $j_{RL}$ outputted by the expert agent XA, for training reasons explained below.

In the embodiment presented herein, a Resnet-34 pretrained on ImageNet is used to implement the perception module $PM_{IL}$.

On the basis of the inputted image $I_{IL}$, the perception module $PM_{IL}$ generates a 1000-dimensional IL perception feature $pf_{IL}$, which is inputted to the IL combination unit $FC_{IL}$.

The IL agent ILA further includes at least one processing head. In this embodiment, ILA includes a plurality of processing heads PHi, i=1..N. All these processing heads are identical to each other except the values of their parameters.

Each pair PHi of processing heads comprises an action head Ahi, an optional head VHi and an optional Speed head SHi.

Each processing head is configured to output an action $a_{IL}$ (also noted $a_{IL,t}$ for time step t), a value $v_t$ and a speed $\dot{x}_{t+1}$ at the next time step t+1 (where x denotes a 3D- or 6D-position of vehicle V, and the speed $\dot{x}$ is its time derivative) on the basis of the latent feature $J_{IL}$, in case a certain type of action, to which the processing head PHj corresponds, is selected.

That is, if the type of action to which the processing head PHj corresponds, is selected: On the basis of the latent feature $J_{IL}$, the action head AHj outputs the suitable control or action $a_{IL,t}$ to control the agent at the next time step t+1, on the basis of the latent feature $J_{IL}$; the value head VHi outputs a calculated value $v_t$, and the speed head $SH_j$ predicts the speed $\dot{x}_{t+1}$ of the agent at the next time step t+1.

The speed heads are used in order to control the variations (per time unit) of one or more key variables of the agent, and prevent excessive oscillations or variations of some variables of the controlled vehicle. In this context, the term 'speed' is to be interpreted broadly as a 'time derivative' of any variable representative of the state of the vehicle.

In the case of a road vehicle, the longitudinal speed of the vehicle may for instance be the sole variable predicted by the speed head; however, the lateral speed of the vehicle may also be a variable predicted by the speed head. To give another example, if the agent is a multi-axis robot, the speeds outputted by the speed head can be the rotation speeds of each of the segments of an articulated arm of the robot.

The IL agent ILA is configured to handle a discrete number N of different types of actions.

For example, in the present embodiment in which the agent is the vehicle V, the types of actions can be 'go straight', 'turn left', 'turn right', 'follow the lane'; and four processing head PH1..PH4 are provided to handle these respective cases.

In order to activate the right processing head PHi when a command (or navigation instruction) is selected, the IL agent ILA comprises a switch S.

At each time step, the switch S receives a command c. Based on this command c, the switch S transmits the latent feature $j_{IL}$ to the processing head PHj which corresponds to the desired type of action indicated by the command c.

Upon receiving a value of the latent feature $j_{IL}$, the action head AHj , the value head VHj and the speed head SHj of the processing head PHj selected by the swith S output the action $a_{IL,t}$, the value $v_t$ and the predicted speed $\dot{x}_{t+1}$ of the vehicle at the next time step.

The detailed setup for training the IL agent ILA is shown on Fig.4. Advantageously the IL agent ILA is trained by imitating the actions of the expert agent XA.

The box on the upper part of Fig.4 represents the control system CS, which executes an instance of the IL agent ILA to output actions $a_{IL}$. These actions are actions to steer/accelerate/brake the vehicle V, represented by a steering wheel, and acceleration and braking pedals.

During training, the IL agent ILA tries to learn a policy $\pi_{IL}$ which imitates the behaviour of the policy $\pi_{RL}$ of the expert agent XA :

$$\pi_{IL} : argmin_{\pi} \, E_{S \sim P|\pi)} \left[ \, L(\pi_{RL}(s), \pi_{IL}(s)) \right]$$

In this purpose, the training is based on exemplary actions outputted by the expert agent XA. Thanks to these actions, strong supervisions can be transmitted to the IL agent ILA, enabling the IL agent to be trained efficiently and have superior performances, compared to state of the art comparable control agents.

As shown on the left part of Fig.4, while the IL agent uses front-facing images $i_{IL}$ as an input, by contrast the expert agent is trained on the basis of top view images $i_{RL}$. For training, the top view images $i_{RL}$ are calculated by simulation/calculation means as known per se based on the images, lidar data, etc. acquired by the vehicle, and constitute 'ground truth' data which are transmitted to the training system TS in order to train the IL agent ILA.

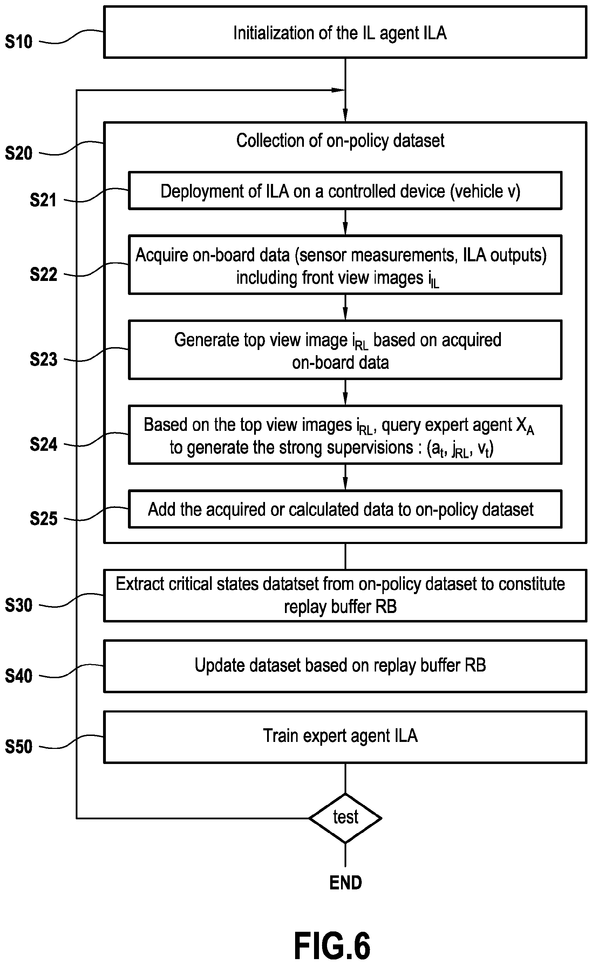

The algorithm used to train the IL agent ILA is illustrated by Fig.6.

In the embodiment presented herein, the data aggregation algorithm named 'Dagger' in its implementation 'DA-RB' comprising a replay buffer, as proposed by ref. [5], is used to train the IL agent; other suitable IL algorithms can be used.

As a first step, the IL agent ILA is initialized (step S10). In this purpose, an initial training dataset is constituted, which comprises real world driving data collected from human drivers (such datasets collected from humans in the real world are easy to collect and already widely available, e.g. the nuScenes database, etc.). The IL agent ILA is then trained on the basis of this training dataset.

Then, the IL agent ILA is trained iteratively by Direct Policy Learning using the 'Dagger' algorithm with replay buffer, proposed by Ref. [5].

The next step therefore consists in preparing an on-policy dataset (step S20):

- S21: The IL agent ILA is deployed on a real controlled device - in the present embodiment, on vehicle V.
- S22: Vehicle V is driven in the real world on a variety of roads, so as to collect on-board data. The collected on-board data comprise in particular sensor measurements (in particular the front view images, ILA outputs, etc.). Each front-view image constitutes an IL image $i_{IL}$.
- S23: RL data, which are necessary as inputs for the expert agent XA, are generated (that is, calculated). In the present embodiment accordingly, for each acquired front-view image $i_{IL}$, a top-view image $i_{RL}$ is generated. The image $i_{RL}$ may be generated advantageously offboard using the training system TS, for instance using offboard tools like offboard 3D detection as proposed by Ref.[10]). Although the top-view images are generated mostly automatically, manual corrections can be necessary in some cases.
- S24: The top-views images $i_{RL}$ and the corresponding measurement vectors $m_{RL}$ are inputted successively to the expert agent XA, during successive queries. Based on these inputs, the expert agent XA generates the corresponding values of latent features $j_{RL}$, actions $a_t$, values $v_t$. The values of these variables (latent features $j_{RL}$, actions $a_t$, values $v_t$) constitute strong supervisions, which will be used to train the IL agent ILA.
- S25: The data acquired or calculated during steps S22-S24 are collected to constitute the on-policy dataset.

Then, among the data of the on-policy dataset, the most interesting data, called 'critical samples' of the on-policy dataset are identified, extracted from the on-policy dataset and stored as a replay buffer RB (step S30).

The training dataset is then updated, taking into account both the former version of the training dataset and the replay buffer (step S40).

The IL agent ILA is then trained by imitation learning, based on the training dataset (step S50). During that step, the weights of the IL agent ILA are updated by backpropagation, on the basis of the training dataset prepared at step S40. Advantageously, this dataset includes strong supervisions (actions or action distributions $(\alpha,\beta)$, values $v_t$, latent features $j_{RL}$) which make it possible to train the ILA agent very efficiently.

Then, a test is made to determine if the training should continue. For instance, the IL agent can be trained a predetermined number of times. If it is determined that the training should continue, the algorithm jumps back at step S20.

Advantageously, the preparation of the training dataset does not require long or difficult annotation (or even hardly feasible) tasks, such as annotating front-view images or lidar pointclouds.

Indeed in the above training dataset preparation method, the top views are generated mostly automatically, and the top views can then be annotated automatically quite efficiently using tools such as the above-mentioned offboard 3D detection.

The loss function used to train the IL agent ILA (or imitation objective for training the IL agent ILA) is a compound loss function $L_{IL}$ which is the following sum:

$$L_{IL} = L_K + L_V + L_F + L_S$$

where $L_K$ is an action term, $L_V$ is a value term, $L_F$ is a feature term, and $L_S$ is a speed term.

Each one of terms $L_V$, $L_F$ and $L_S$ is an optional term. Besides, each one of terms $L_K$, $L_V$, $L_F$ and $L_S$ is usually itself actually a sum of terms.

The action term $L_K$ of the IL loss function $L_{IL}$ depends on whether the expert agent XA used for training the IL agent is configured to output deterministic values or stochastic values.

When the expert agent XA is configured to output deterministic values, the action term can be expressed as follows:

$$L_K = || a_{RL} - a_{IL} ||_1$$

where $a_{RL}$ is the action outputted by the expert agent, $a_{IL}$ is the action predicted by ILA at the considered time step, and $|| \,||_1$ is an L1 norm.

In some embodiments, the expert agent XA used for training the IL agent is configured to output stochastic values. That is, the expert agent is configured to output the parameters of an action distribution (For instance, the values of the parameters $(\alpha,\beta)$ of a beta distribution).

In these embodiments, the expert agent XA is therefore configured, instead of predicting deterministic actions, to predict action distributions, values and latent features. The action head AHi of each processing head PHi of XA is in this case configured to predict distribution parameters.

In this case the control term $L_K$ may be configured as a KL-divergence (Kullback-Leibler divergence) in order to handle these parameters:

$$L_K = KL(\pi_{RL} || \pi_{IL})$$

between the action distribution $\pi_{RL}$ predicted by the expert agent XA and $\pi_{IL}$ predicted by the IL agent ILA, where the function KL is the Kullbach-Leibler divergence.

The value heads VHi of the IL agent ILA are trained to regress value as a side task of the IL agent. In this purpose, the value term LV is included in the loss function $L_{IL}$. The value term is equal to the mean square error between $V_{RL}$, the value predicted by the expert agent XA, and $V_{IL}$, the value predicted by the IL agent ILA. Accordingly, the term LV can be expressed as:

$$L_V = \lambda_V \cdot (V_{RL} - V_{IL})^2$$

The feature term $L_F$ is used when the expert agent is a neural network comprising an expert encoder XE latent feature $j_{RL}$. The latent feature $j_{RL}$ of the expert agent XA is then a compact representation that contains essential information for driving as it can be mapped to expert actions using an action head with only two FC layers.

For this reason, advantageously feature matching is used in some embodiments to efficiently transfer knowledge between the expert agent XA and the IL agent.

Indeed in these embodiments, the IL agents is led to learn to embed camera images to the same latent space as the expert agent: It has been observed that doing so helps the IL agent to better generalize to new weather and new situations. In order to reap this benefit, the following loss term $L_F$ can be included in the loss function $L_{IL}$:

$$L_F = \lambda_F \cdot || j_{RL} - j_{IL} ||^2$$

where $|| \,||_2$ is a norm L2.

Using this loss term LF indeed forces the IL encoder $E_{IL}$ of the IL agent to embed the information contained in the inputted front image $i_{IL}$ as a latent feature $j_{IL}$ similar to the latent feature $j_{RL}$.

The speed term or speed prediction regularization term $L_S$ can be expressed as:

$$L_S = \lambda_S \cdot | \dot{x} - \dot{x}_{IL} |$$

where $\lambda_s$ is a scalar weight, and $\dot{x}$ is a measured speed acquired by on-board sensors of vehicle V during driving and $\dot{x}_{IL}$ is the speed predicted by the IL agent ILA, at the considered time step.

The efficiency of the expert agent XA and IL agent ILA proposed herein have been tested on the environment simulator CARLA.

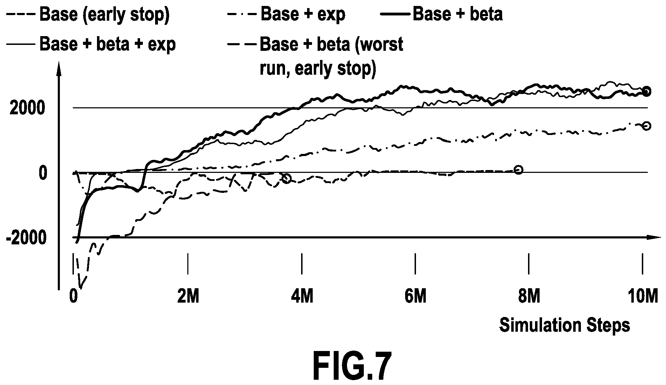

Specifically, with respect to the expert agent XA, the benefits of using an exploration loss term $L_{exp}$ in the loss function, and of representing the distribution of the action by a beta distribution have been evaluated. The results are shown by Fig.7.

Fig.7 shows the relationship between the total reward collected during an episode, based on a moving window averaged over the last 100 episodes, and the number of simulation steps (in millions).

As shown in Fig. 7, the baseline embodiment ('Base') with Gaussian distribution and entropy loss is trapped in a local minimum where staying still is the most rewarding strategy, whereby the training has to be stopped prematurely. Leveraging the exploration loss in the IL agent loss function $L_{IL}$, the embodiment "Base+exp" is trained successfully, despite relatively high variance and not a very high sample efficiency. In order to improve these results, the baseline embodiment is modified to use the Beta distribution (two curves are shown to illustrate these embodiments): Using the Beta distribution appears to substantially improve the results; however, the training still collapses in some cases due to insufficient exploration. Finally, an embodiment 'Base + beta + exp', combining the exploration loss in the IL agent loss function and usage of the Beta distribution achieves the best results, ensuring a stable and sample efficient training.

In addition, the results of a training method for training the IL agent ILA according to the present disclosure are shown by the following table:

| Success Rate % | NCd-tt | NCd-tn | NCd-nt | NCd-nn |
|---|---|---|---|---|
| Ref.[1] | 71 | 63 | 51 | 39 |
| Ref.[9] | 54 | 47 | 29 | 29 |
| Ref.[4] | N/A | N/A | 30 | 32 |
| DA-RB (E) - Ref.[5] | 66 | 56 | 36 | 35 |
| DA-RB - Ref.[5] | 62 | 60 | 34 | 25 |
| IL agent ILA, trained on 'Autopilot' of CARLA (Ref.[3]) | 88 | 29 | 32 | 28 |
| IL agent ILA, trained on expert agent XA | 86 | 82 | 78 | 78 |

This table shows the success rates of various camera-based agents, trained by end-to-end learning. The success rate measures the capacity of a considered agent to complete a predetermined trip, in a certain environment (a specific town and a specific test weather).

The driving test on which the agents are tested is the NoCrash' test of Ref.[2]. In addition, the tests were carried out in the 'dense' case, that is, with a dense traffic. The values shown in the table are the mean value obtained during the tests, at the 5th iteration of the DAGGER algorithm (of Ref.[5]).

- 'tt' refers to the training town and training weather, that is, the environment (town and weather) in which the agents were trained;
- 'tn' means 'training town' but 'new weather'
- 'nt' means 'new town' but training weather
- 'nn' means 'new town' and 'new weather'.

For the 'DA-RB' agent of Ref.[5], triangular perturbations were added to the off-policy dataset. (E) means that the value represents the ensemble of all iterations.

The 'Autopilot' of CARLA is the expert agent provided by CARLA (Ref.[3]).

The above table shows first that the IL agent ILA exhibits superior performance in the training town and training weather environment, as compared with the known agents presented in the first 5 lines of the table.

However the IL agent ILA trained on the Autopilot of CARLA does not exhibit a good capacity to generalize:

Its performances become weaker in either 'new town' and/or 'new weather' (the 3 columns on the right).

However, conversely the IL agent ILA exhibits very good performances even in new town' and/or 'new weather' environments, thereby showing quite a good generalization capacity.

Although the present disclosure herein has been described with reference to particular embodiments, it is to be understood that these embodiments are merely illustrative of the principles and applications of the present disclosure.

In particular, although the methods and systems according to the present disclosure have been presented in the case of the control of a vehicle, the present disclosure can be applied to a broad variety of controlled devices. It can be applied for instance to any kind of vehicle (ground, marine vehicle, aircraft, ..).

It is intended that the specification and examples be considered as exemplary only, with a true scope of the disclosure being indicated by the following claims.

**Claims**

1. A training method for training a neural-network based IL agent (ILA) to calculate predictions ($\tau_t$) sufficient to calculate controls ($a_t$) for controlling a controlled device (V) to perform a task or parameters ($\alpha,\beta$) of a distribution of said predictions ($\tau_t$), wherein

    the IL agent (ILA) is configured to input at least one IL datum ($I_{IL}$) representing an environment of the controlled device and an IL measurement vector ($m_{IL}$) describing a state ($s_t$) of the controlled device (V) and to output said predictions ($\tau_t$) or parameters ($\alpha,\beta$) of a distribution of said predictions (Tt);
    the training method comprises an IL agent training step (S50) of training the IL agent (ILA) by imitation learning so as to imitate an expert agent (XA);
    the expert agent (XA) is a neural-network-based expert agent (XA) trained by reinforcement learning;
    the expert agent (XA) is configured to input at least one RL datum ($I_{RL}$) representing the environment of the controlled device and a RL measurement vector ($m_{RL}$) describing a state of the controlled device (V), and to output said predictions ($\tau_t$) or parameters ($\alpha,\beta$) of said distribution of said predictions ($\tau_t$).

2. The training method according to claim 1, comprising the steps of:

    (S22) acquiring on-board data by operating the controlled device (V) to perform the task;
    (S23) based on the on-board data, generating RL data ($i_{RL}$);
    (S24) for each calculated RL datum among the calculated RL data, querying the expert agent (XA) to output said predictions ($\tau_t$) or parameters ($\alpha,\beta$) of said distribution of said predictions ($\tau_t$);
    (S40) recording the outputted predictions ($\tau_t$) or parameters ($\alpha,\beta$) in an IL agent training dataset; and wherein

    the IL agent training dataset is used to train the IL agent (ILA) during the IL agent training step (S50).

3. The training method according to claim 1 or 2, wherein

    the IL agent (ILA) is further configured to output a value of a speed of change of variable(s) of the controlled device (V); and
    a loss function ($L_{IL}$) used during the IL agent training step (S50) includes a speed term ($L_S$) which minimizes said speed of change.

4. The training method according to any one of claims 1 to 3, wherein
    the IL agent (ILA) is configured:

    based on said at least one IL datum ($I_{IL}$), to calculate an IL perception feature ($pf_{IL}$);
    based on the IL measurement vector ($m_t$), to calculate an IL measurement feature ($mf_{IL}$);
    based on the IL perception feature ($pf_{IL}$) and the IL measurement feature ($mf_{IL}$), to calculate an IL latent feature ($j_{IL}$); and
    based on the IL latent feature ($j_{IL}$), to calculate said predictions ($\tau_t$) or said parameters ($\alpha,\beta$) of said distribution of said predictions ($\tau_t$).

5. The training method according to any one of claims 1 to 4, wherein

    the expert agent (XA) is a model trained by model-free reinforcement learning using an RL loss function ($L_{RL}$);

the expert agent (XA) is configured to output said parameters ($\alpha,\beta$) of said distribution of said predictions ($\tau_t$);
an RL loss function ($L_{RL}$) used to train the RL agent (XA) comprises an exploration term ($L_{exp}$); and
the exploration term ($L_{exp}$) is configured so as to minimize, during training, a difference between said distribution of said predictions ($\tau_t$) and a prior distribution ($p_z$).

6. The training method according to any one of claims 1 to 5, wherein

    the expert agent (XA) is configured:

        based on said at least one RL datum ($I_{RL}$) and said RL measurement vector ($m_{RL}$), to calculate an RL latent feature ($j_{RL}$);
        based on the RL latent feature ($j_{RL}$), to calculate said predictions ($\tau_t$) or said parameters ($\alpha,\beta$) of said distribution of said predictions ($\tau_t$);

    the IL agent (ILA) is configured:

        based on said at least one IL datum ($I_{IL}$) and said IL measurement vector ($m_{IL}$), to calculate an IL latent feature ($j_{RL}$);
        based on the IL latent feature ($j_{IL}$), to calculate said predictions ($\tau_t$) or said parameters ($\alpha,\beta$) of said distribution of said predictions ($\tau_t$),

    an IL loss function ($L_{IL}$) used to train the IL agent (ILA) comprises a feature term ($L_F$); and
    the feature term ($L_F$) is configured so as to minimize, during training, a difference between the RL latent feature ($j_{RL}$) and the IL latent feature ($j_{IL}$).

7. The training method according to any one of claims 1 to 6, wherein

    an IL loss function ($L_{IL}$) used to train the IL agent (ILA) comprises an action term ($L_K$); and
    either the expert agent (XA) and the IL agent (ILA) are configured to calculate said predictions ($\tau_t$), and the action term ($L_K$) is configured so as to minimize, during training, a difference between the predictions of the expert agent (XA) and the predictions of the IL agent (ILA), or the expert agent (XA) and the IL agent (ILA) are configured to output said parameters ($\alpha,\beta$) of said distribution of said predictions ($\tau_t$), and the action term ($L_K$) is configured so as to minimize, during training, a difference between a distribution ($\pi_{RL}$) of said predictions ($\tau_t$) predicted by the expert agent (XA) and a distribution ($\pi_{IL}$) of said predictions ($\tau_t$) predicted by the IL agent (ILA).

8. The training method according to any one of claims 1 to 7, wherein

    an IL loss function ($L_{IL}$) used to train the IL agent (ILA) comprises a value term ($L_V$);
    the expert agent (XA) and the IL agent are configured so as to calculate a value ($V_{RL},V_{IL}$); and
    the value term ($L_V$) is configured so as to minimize, during training, a difference between a value ($V_{RL}$) predicted by the expert agent (XA) and a value ($V_{IL}$) predicted by the IL agent (ILA).

9. The training method according to any one of claims 1 to 8, wherein the expert agent (XA) and the IL agent (ILA) are configured to output said parameters ($\alpha,\beta$) of said distribution of said predictions ($\tau_t$), and said distribution of said predictions ($\tau_t$) is represented by a beta distribution.

10. The training method according to any one of claims 1 to 9, wherein said at least one RL datum ($i_{RL}$) includes at least one multi-channel image comprising a plurality of channels.

11. A control method for controlling a controlled device (V) to perform a task, the control method comprising:

    using an imitation agent trained with a training method according to any one of claims 1 to 10 to calculate predictions sufficient to calculate the controls or parameters of a distribution of said predictions; and
    calculating the controls based on said predictions or on said parameters of said distribution of said predictions.

12. One or more computer program(s) comprising instructions which, when the instructions are executed by a computer, cause the computer to carry out the steps of a training method according to any one of claims 1 to 10 or a control method according to claim 11.

13. A non-transitory computer readable medium, having the one or more computer program(s) according to claim 12 stored thereon.

14. A training system (TS) for training an IL agent (ILA) to calculate predictions ($\tau_t$) sufficient to calculate controls ($a_t$) for controlling a ground controlled device (V) to perform a task or parameters ($\alpha, \beta$) of a distribution of said predictions ($\tau_t$); wherein

the control system comprises one or more processors (112) and a computer-readable medium (111);
the computer-readable medium (111) comprises computer instructions stored therein, wherein the instructions, when executed by the one or more processors, cause the one or more processors to carry out the steps of a training method according to any one of claims 1 to 10.

15. A control system (CS) for calculating predictions ($\tau_t$) sufficient to calculate controls ($a_{RL}$) for controlling a ground controlled device (V) to perform a task, wherein

the control system comprises one or more processors (12) and a computer-readable medium (11);
the computer-readable medium (11) comprises computer instructions stored therein, wherein the instructions, when executed by the one or more processors, cause the one or more processors to calculate said predictions ($\tau_t$) by implementing an IL agent (ILA) trained by a training method according to any one of claims 1 to 10.

**FIG.1**

**FIG.2**

**FIG.3**

**FIG.4**

(a) (b) (c)

(d) (e) (f)

FIG.5

FIG.6

FIG.7

Europäisches
Patentamt

European
Patent Office

Office européen
des brevets

# EUROPEAN SEARCH REPORT

Application Number

EP 21 18 8744

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | A. WARRINGTON ET AL: "Robust Asymmetric Learning in POMDPs", ARXIV.ORG, CORNELL UNIVERSITY LIBRARY, 201 OLIN LIBRARY CORNELL UNIVERSITY ITHACA, NY 14853, 19 March 2021 (2021-03-19), XP081901169, * abstract * * Sections 3, 5 and 6.2, Appendix D * ----- | 1-15 | INV. G06N3/00 G06N3/08 G06N3/04 |
| A,D | E. OHN-BAR ET AL: "Learning Situational Driving", 2020 IEEE/CVF CONFERENCE ON COMPUTER VISION AND PATTERN RECOGNITION (CVPR), 13 June 2020 (2020-06-13), pages 11293-11302, XP033805402, DOI: 10.1109/CVPR42600.2020.01131 [retrieved on 2020-08-03] * Section 3.2 * ----- | 1-15 | |
| A | US 2021/086798 A1 (HONDA MOTOR CO LTD [JP]) 25 March 2021 (2021-03-25) * paragraphs [0032] – [0075] * ----- | 1-15 | TECHNICAL FIELDS SEARCHED (IPC) G06N |

The present search report has been drawn up for all claims

| Place of search | Date of completion of the search | Examiner |
|---|---|---|
| The Hague | 27 January 2022 | Millet, Guillaume |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 18 8744

This annex lists the patent family members relating to the patent documents cited in the above-mentioned European search report.
The members are as contained in the European Patent Office EDP file on
The European Patent Office is in no way liable for these particulars which are merely given for the purpose of information.

27-01-2022

| Patent document cited in search report | Publication date | Patent family member(s) | Publication date |
|---|---|---|---|
| US 2021086798 A1 | 25-03-2021 | NONE | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **DIAN CHEN ; BRADY ZHOU ; VLADLEN KOLTUN ; PHILIPP KRÄHENBÜHL.** Learning by cheating. *Conference on Robot Learning (CoRL),* 2020, 66-75
- **FELIPE CODEVILLA ; EDER SANTANA ; ANTONIO M L'OPEZ ; ADRIEN GAIDON.** Exploring the limitations of behaviour cloning for autonomous driving. *Proceedings of the IEEE International Conference on Computer Vision (ICCV),* 2019, 9329-9338
- **ALEXEY DOSOVITSKIY ; GERMAN ROS ; FELIPE CODEVILLA ; ANTONIO LOPEZ ; VLADLEN KOLTUN.** CARLA: An open urban driving simulator. *Proceedings of the Conference on Robot Learning (CoRL),* 2017, 1-16
- **ESHED OHN-BAR ; ADITYA PRAKASH ; ASEEM BEHL ; KASHYAP CHITTA ; ANDREAS GEIGER.** Learning situational driving. *Proceedings of the IEEE Conference on Computer Vision and Pattern Recognition (CVPR),* 2020, 11296-11305
- **ADITYA PRAKASH ; ASEEM BEHL ; ESHED OHN-BAR ; KASHYAP CHITTA ; ANDREAS GEIGER.** Exploring data aggregation in policy learning for vision-based urban autonomous driving. *Proceedings of the IEEE Conference on Computer Vision and Pattern Recognition (CVPR),* 2020, 11763-11773
- **JOHN SCHULMAN ; PHILIPP MORITZ ; SERGEY LEVINE ; MICHAEL JORDAN ; PIETER ABBEEL.** High-dimensional continuous control using generalized advantage estimation. *Proceedings of the International Conference on Learning Representations (ICLR),* 2016
- **JOHN SCHULMAN ; FILIP WOLSKI ; PRAFULLA DHARIWAL ; ALEC RADFORD ; OLEG KLIMOV.** Proximal policy optimization algorithms. *arXiv:1707.06347,* 2017
- **MARIN TOROMANOFF ; EMILIE WIRBEL ; FABIEN MOUTARDE.** Is deep reinforcement learning really superhuman on Atari?. *In Deep Reinforcement Learning Workshop of the Conference on Neural Information Processing Systems,* 2019
- **ALBERT ZHAO ; TONG HE ; YITAO LIANG ; HAIBIN HUANG ; GUY VAN DEN BROECK ; STEFANO SOATTO.** Sam: Squeeze-and-mimic networks for conditional visual driving policy learning. *Conference on Robot Learning (CoRL),* 2020
- **QI, C. ; ZHOU, Y. ; NAJIBI, M. ; SUN, P. ; VO, K.T. ; DENG, B. ; ANGUELOV, D.** Offboard 3D Object Detection from Point Cloud Sequences. *ArXiv, abs/2103.05073,* 2021